**Europäisches Patentamt**

**European Patent Office**

**Office européen des brevets**

(19)

(11) Numéro de publication : **0 364 001 B1**

(12) **FASCICULE DE BREVET EUROPEEN**

(45) Date de publication du fascicule du brevet :
08.07.92 Bulletin 92/28

(51) Int. Cl.$^5$ : **A01D 89/00**

(21) Numéro de dépôt : **89121967.7**

(22) Date de dépôt : **06.11.86**

(54) **Dispositif de ramassage de végétaux se trouvant sur le sol.**

(30) Priorité : **08.11.85 FR 8516812**

(43) Date de publication de la demande :
**18.04.90 Bulletin 90/16**

(45) Mention de la délivrance du brevet :
**08.07.92 Bulletin 92/28**

(84) Etats contractants désignés :
**AT CH DE FR GB IT LI NL SE**

(56) Documents cités :
**EP-A- 0 116 514**
**FR-A- 1 056 448**
**FR-A- 1 109 523**
**US-A- 4 453 375**
**US-A- 4 539 801**

(60) Numéro de publication de la demande initiale
en application de l'article 76 CBE : **0 224 424**

(73) Titulaire : **KUHN S.A.**
**4, Impasse des Fabriques**
**F-67700 Saverne (FR)**

(72) Inventeur : **Haberkorn, Jean-Paul**
**11, Rue Ste Barbe**
**F-67700 Monswiller (FR)**

(74) Mandataire : **Andres, Jean-Claude**
**KUHN S.A. 4, Impasse des Fabriques**
**F-67700 Saverne (FR)**

## Description

La présente invention concerne un dispositif de ramassage de végétaux coupés tels que de l'herbe, du foin ou de la paille, se trouvant sur le sol. Il comporte notamment un arbre support sensiblement horizontal, des éléments de ramassage en forme de segments qui sont fixés sur cet arbre et s'étendent dans des plans sensiblement perpendiculaires à l'axe longitudinal de cet arbre support et, des moyens d'entraînement pour entraîner ledit arbre support en rotation autour de son axe longitudinal durant le travail.

De tels dispositifs peuvent équiper les machines de récolte telles que les presses, les ensileuses ou les remorques autochargeuses et servent à prélever les végétaux au sol et à les amener vers un dispositif de transport ou de réception de ces machines.

Les dispositifs équipés de segments de ramassage ont le grand avantage de ne plus posséder de dents ou fourches de ramassage métalliques qui peuvent se briser facilement et causer d'importants dégâts aux machines de récolte en restant dans les végétaux.

Des dispositifs munis de tels segments de ramassage sont connus dans la demande de brevet EP-A-0 116 514. Ils présentent toutefois encore des inconvénients qui entravent leur généralisation. Par exemple, ils nécessitent un très grand nombre de segments pour assurer une arrivée régulière de végétaux à la machine de récolte. De plus, ces segments de ramassage sont fréquemment déchirés ou même arrachés lorsqu'ils rencontrent des obstacles. Ceci entraîne des frais d'entretien et de remplacement assez élevés. Enfin, ces dispositifs connus sont souvent agressifs à l'égard de produits secs tels que du foin.

La présente invention a notamment pour but d'obvier aux inconvénients des dispositifs connus.

A cet effet, l'invention consiste en ce que l'arbre support des segments de ramassage est entouré par une enveloppe cylindrique de plus grand diamètre et de même axe longitudinal que cet arbre support, cette enveloppe cylindrique étant solidaire en rotation dudit arbre support et comportant des ouvertures à travers lesquelles s'étendent les segments de ramassage.

Durant le travail, les végétaux entrent aussi en contact avec cette enveloppe qui participe à leur transport. Ceci permet de déplacer ces végétaux sans qu'ils ne frottent sur des glissières de guidage fixes comme sur les machines connues. On évite ainsi l'émiettement de produits fragiles. De plus, lesdits segments ne frottent pas eux-mêmes sur des glissières de guidage fixes et leurs moyens de fixation sur l'arbre support sont protégés. La tenue de ces segments est ainsi considérablement allongée et les frais d'entretien sont réduits.

Selon une autre caractéristique, les segments de ramassage sont disposés autour de l'arbre support et s'étendent à travers les ouvertures de l'enveloppe cylindrique suivant des hélices sensiblement symétriques par rapport à un plan médian du dispositif.

Cette disposition suivant plusieurs lignes ininterrompues tout autour de l'arbre support, permet d'assurer un approvisionnement continu et régulier de la machine de récolte, avec un nombre de segments nettement inférieur à celui des dispositifs connus. De très bons résultats ont été obtenus avec des dispositifs de ramassage présentant deux segments diamétralement opposés sur chaque flasque de fixation.

Selon une autre caractéristique, chaque segment de ramassage comporte un côté actif situé en-dehors de l'enveloppe cylindrique, lequel côté est incliné dans la direction opposée au sens de rotation et forme un angle d'environ 60° avec une droite dirigée radialement et passant par l'extrémité inférieure dudit côté actif. Ce côté est moins agressif à l'égard des végétaux et il permet au segment de se retirer facilement des végétaux ramassés.

D'autres caractéristiques et avantages de l'invention ressortiront de la description ci-après avec référence aux dessins annexés qui représentent, à titre d'exemple non limitatif, une forme de réalisation selon l'invention.

Dans ces dessins :
– La figure 1 représente une vue d'ensemble d'un dispositif de ramassage selon l'invention,
– La figure 2 représente, à plus grande échelle, une coupe selon un plan perpendiculaire à l'axe longitudinal du dispositif.

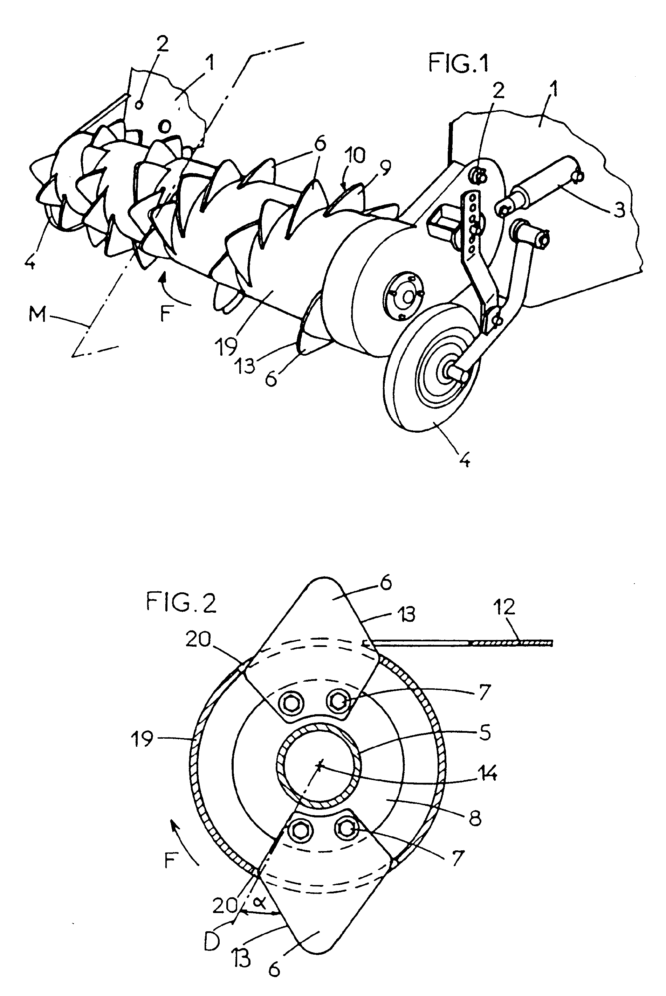

Le dispositif de ramassage selon l'invention constitue une partie intégrante d'une machine agricole telle qu'une presse, une ensileuse ou une remorque autochargeuse. Une telle machine est désignée par les repères (1) sur la figure 1. Ledit dispositif de ramassage est articulé sur la machine agricole (1) au moyen d'axes (2). Il peut être déplacé autour de ces axes (2) au moyen de vérins hydrauliques (3). De plus, de part et d'autre du dispositif de ramassage est prévue une roue de jauge (4) qui se déplace sur le sol. Ces roues (4) sont réglables en hauteur.

Tel que cela ressort des figures 1 et 2, le dispositif de ramassage comporte un arbre support (5) sensiblement horizontal qui peut être entraîné en rotation dans le sens de la flèche (F) autour de son axe longitudinal (14). Cet arbre est muni sur son pourtour de segments de ramassage (6) de forme sensiblement triangulaire. Ces segments (6) sont fixés au moyen de boulons (7) sur des flasques (8) solidaires de l'arbre support (5). Ils sont disposés de telle sorte que leurs plus grandes faces (9 et 10) s'étendent dans des plans sensiblement perpendiculaires à l'axe longitudinal de l'arbre support (5). Ces segments de ramassage (6) sont indépendants les uns des autres. Ils peuvent ainsi être remplacés individuellement en cas d'usure ou rupture accidentelle.

Les segments de ramassage (6) sont avantageusement flexibles de manière à pouvoir suivre les dénivellations du sol. Ils peuvent être en caoutchouc ou en matière plastique souple.

Tel que cela ressort notamment de la figure 2, l'arbre support (5) comporte une enveloppe cylindrique (19) de plus grand diamètre. Cette enveloppe (19) entoure ledit arbre support (5) et est munie d'ouvertures (20) à travers lesquelles s'étendent les segments de ramassage (6). Ce mode de réalisation ne nécessite pas la présence de glissières de guidage (11). Durant le travail, l'enveloppe (19) tourne avec l'arbre support (5) et les segments de ramassage (6). Elle participe au déplacement des produits ramassés et assure une protection des moyens de fixation des segments (6).

Les segments de ramassage (6) sont disposés sur le pourtour de l'arbre support (5) et s'étendent à travers les ouvertures (20) de l'enveloppe (19) suivant des hélices symétriques par rapport au plan médian (M) du dispositif. Cette disposition permet une bonne répartition des segments (6) autour dudit arbre support (5) en vue d'un approvisionnement régulier de la machine de récolte en produits coupés.

Chaque flasque (8) porte deux segments de ramassage (6) diamétralement opposés et qui s'étendent à travers les ouvertures (20). On obtient ainsi une bonne complémentarité pour un ramassage de la totalité des produits se trouvant au sol. En effet, dans chaque plan, il y a pratiquement constamment un segment (6) en position de ramassage.

Chaque segment de ramassage (6) comporte endehors de l'enveloppe (19) un côté actif (13) qui est avantageusement incliné dans la direction opposée au sens de rotation (F). Il forme ainsi un angle ($\alpha$) d'environ 60° avec une droite (D) dirigée radialement et passant par l'extrémité inférieure dudit côté actif (voir figure 2). Grâce à cette inclinaison, les segments (6) se retirent facilement des produits déposés sur le tablier (12). Dans ce même but, l'extrémité extérieure de chaque segment de ramassage (6) est arrondie. Au dégagement, les produits transportés glissent facilement sur cette partie arrondie. De plus, ces extrémités arrondies sont moins agressives à l'égard des produits fragiles tels que du foin sec et de la végétation restante.

Durant le travail, l'arbre support (5) avec les segments de ramassage (6) est entraîné en rotation dans le sens de la flèche (F). Cet entraînement est réalisé d'une manière connue en soi à partir de l'arbre de prise de force du tracteur d'entraînement (non représenté). Les moyens utilisés à cet effet sont généralement constitués par une chaîne ou une courroie disposée latéralement au dispositif et elle-même entraînée à partir d'un carter de renvoi prévu sur la machine de récolte.

En raison de cette rotation, les segments (6) ramassent les végétaux au sol, les élèvent et les déposent sur le tablier (12) de la machine de récolte.

Celle-ci possède généralement des moyens tels que des griffes qui reprennent les produits ainsi ramassés.

Il est bien évident que l'on pourra encore apporter à l'exemple de réalisation décrit ci-dessus divers perfectionnements, modifications ou additions ou remplacer certains éléments par des éléments équivalents sans pour autant sortir du cadre de la présente invention tel que défini dans les revendications.

## Revendications

1. Dispositif de ramassage de végétaux coupés se trouvant sur le sol, comportant notamment un arbre support (5) sensiblement horizontal, des segments de ramassage (6) fixés sur des flasques (8) de cet arbre support (5) et s'étendant dans des plans sensiblement perpendiculaires à l'axe longitudinal (14) de cet arbre support (5) et, des moyens d'entraînement faisant tourner ledit arbre support (5) autour de son axe longitudinal (14) durant le travail, caractérisé par le fait que l'arbre support (5) est entouré par une enveloppe cylindrique (19) de plus grand diamètre et de même axe longitudinal (14) que cet arbre support (5), cette enveloppe cylindrique (19) étant solidaire en rotation dudit arbre support (5) et comportant des ouvertures (20) à travers lesquelles s'étendent les segments de ramassage (6).

2. Dispositif selon la revendication 1, caractérisé par le fait que les segments de ramassage (6) sont disposés autour de l'arbre support (5) et s'étendent à travers les ouvertures (20) de l'enveloppe (19) suivant des hélices sensiblement symétriques par rapport au plan médian (M) du dispositif.

3. Dispositif selon la revendication 1 ou 2, caractérisé par le fait que sur chaque flasque (8) de l'arbre support (5) sont disposés deux segments de ramassage (6) diamétralement opposés et qui s'étendent à travers des ouvertures (20) de l'enveloppe cylidrinques (15).

4. Dispositif selon l'une quelconque des revendications 1 à 3, caractérisé par le fait que chaque segment (6) comporte un côté actif (13) situé en-dehors de l'enveloppe (19), lequel côté est incliné dans la direction opposée au sens de rotation (F) et forme un angle ($\alpha$) d'environ 60° avec une droite (D) dirigée radialement et passant par l'extrémité inférieure dudit côté actif.

## Claims

1. Device for gathering cut crop lying on the ground, mainly comprising a substantially horizontal support shaft (5), gathering elements (6) fastened on plates (8) of this support shaft (5) and extending in planes substantially perpendicular to the longitudinal axis (14) of this support shaft (5) and driving means for the rotation of said support shaft (5) around its longitudinal axis (14) during work, characterized in that the support shaft (5) is surrounded by a circular sheath (19) of a greater diameter and with the same longitudinal axis (14) than the support shaft (5), this cylindrical sheath (19) being integral with said support shaft (5) during rotation and comprising openings (20) through which the gathering elements (6) extend.

2. Device according to Claim 1, characterized in that the gathering elements (6) are located around the support shaft (5) and extend through the openings (20) of the sheath (19) in the manner of helixes which are substantially symmetrical to the median plane (M) of the device.

3. Device according to Claim 1 or 2, characterized in that on each plate (8) of the support shaft (5) are mounted two gathering elements (6) which are placed diametrically opposite and which extend through openings (20) of the cylindrical sheath (19).

4. Device according to any one of Claims 1 to 3, characterized in that each element (6) comprises an active side (13) located outside the sheath (19), said active side being inclined in the direction opposite to the direction of rotation (F) and forming an angle ($\alpha$) of about 60° with a radially directed straight line (D) which crosses the lower end of said active side.

**Patentansprüche**

1. Vorrichtung zum Aufnehmen von gemähten sich auf dem Boden befindlichen Pflanzen, mit insbesondere einer nahezu horizontalen Tragwelle (5), Aufnahmesegmenten (6), die auf Flanschen (8) dieser Tragwelle (5) montiert sind und sich in zur Längsachse (14) dieser Tragwelle (5) nahezu senkrechten Ebenen erstrecken und, Antriebsmittel, die diese Tragwelle (5) während der Arbeit um ihre Längsachse (14) in Drehung bringen, dadurch gekennzeichnet, dass die Tragwelle (5) von einem zylindrischen Mantel (19) mit grösserem Durchmesser und mit gleicher Längsachse (14) als diese Tragwelle (5) umgeben ist, wobei dieser zylindrische Mantel (19) drehfest mit der Tragwelle (5) verbunden ist und Öffnungen (20) beträgt durch welche sich die Aufnahmesegmente (6) erstrecken.

2. Vorrichtung nach Anspruch 1, dadurch gekennzeichnet, dass die Aufnahmesegmente (6) um die Tragwelle (5) angeordnet sind und sich durch die Öffnungen (20) des Mantels (19) erstrecken gemäss Schraubenlinien, die nahezu symmetrisch zu der Mittelebene (M) der Vorrichtung sind.

3. Vorrichtung nach Anspruch 1 oder 2, dadurch gekennzeichnet, dass auf jedem Flansch (8) der Tragwelle (5) zwei diametral entgegengesetzte Aufnahmesegmente (6) angeordnet sind und welche sich durch Öffnungen (20) des zylindrischen Mantels (19) erstrecken.

4. Vorrichtung nach irgend einem der vorhergehenden Ansprüche, dadurch gekennzeichnet, dass jedes Segment (6) eine aktive Seite (13) beträgt, die sich ausserhalb des Mantels (19) befindet, welche Seite in die der Drehrichtung (F) entgegengesetzten Richtung geneigt ist und einen Winkel ($\alpha$) von etwa 60° mit einer radial ausgerichteten und durch das untere Ende dieser aktiven Seite verlaufenden Geraden (D) bildet.

FIG.1

FIG.2